Europäisches Patentamt

European Patent Office

Office européen des brevets

(11) Publication number: **0 334 823**
**A1**

## (12) EUROPEAN PATENT APPLICATION

(21) Application number: **89830129.6**

(22) Date of filing: **23.03.89**

(51) Int. Cl.⁴: **B 60 K 25/02**
**F 02 B 67/06**

(30) Priority: **24.03.88 IT 339188**

(43) Date of publication of application:
**27.09.89 Bulletin 89/39**

(84) Designated Contracting States: **DE FR GB**

(71) Applicant: **VM MOTORI S.P.A.**
**Via Ferrarese, 29**
**I-44042 Cento (Ferrara) (IT)**

(72) Inventor: **Brighigna, Mario**
**Via Giovannina, 60**
**I-44042 Cento (Ferrara) (IT)**

(74) Representative: **Lanzoni, Luciano**
**c/o BUGNION S.p.A. Via Farini, 37**
**I-40124 Bologna (IT)**

(54) **An improvement in the dimensional design of motor vehicle engines, in particular, in the positioning of accessory drive units.**

(57) The improvement is aimed particularly at engines fitted with drive units for a number of accessory systems, and consists in the adoption of a first drive unit (2) with a through shaft (1), of which one end (1a) is connected to the crankshaft (9a) and the remaining end (1b) coupled to a further drive unit (3) installed in series with the first; by eliminating belt drives, one obtains a reduction in the overall dimensions of the engine, easier servicing on the engine itself, and in addition, the greater dependability of a rigid driveline.

FIG 1

EP 0 334 823 A1

Bundesdruckerei Berlin

## Description

## An improvement in the dimensional design of motor vehicle engines, in particular, in the positioning of accessory drive units

The invention relates to an improvement aimed at limiting the overall dimensions of motor vehicle engines, in particular when required to operate a number of drive units for accessories such as air conditioning and power assisted steering. There is a current tendency for the purchasers of motor vehicles, i.e. automobiles, trucks and other self-propelled machines, either to request a number of accessories as part of the ex-works package, or to have them fitted at a later date; accessories of the type in question serve generally to give an easier and/or more comfortable ride, e.g. power assisted steering and air conditioning systems. Each such accessory requires a drive unit that has to been connected mechanically to the crankshaft, together with others serving auxiliaries essential for operation of the engine itself, namely, the alternator suppling power to the electrical system, and the injection pump and brake servo vacuum pump (in the case of diesel engines); conventionally, this connection takes the form of one or more drive belts looped around pulleys mounted to the sides of the crankcase, often in a disorderly fashion. The result is that the dimensions of the engine are increased both transversely and longitudinally, and the belts and pulleys themselves become an obstacle when servicing the engine or the drive units. By contrast, it will be remembered that designers seek to limit the size of the engine compartment, of automobiles especially, in order to reduce the overall length of the vehicle and obtain maximum possible passenger space.

The problem of limiting engine size is most evident in vehicles offering the option of petrol or diesel propulsion. The engine compartment in this type of vehicle must be designed with the dimensions of the diesel engine in mind, as this generally takes up more space than a petrol engine of the same cubic capacity, and allowance must also be made for the possibility of accessory drive units being fitted; currently, these units are fitted piecemeal and driven by a number of vee-belts installed at random in the compartment, the result of which is that difficulties are created with routine and major servicing.

Accordingly, the object of the invention is one of improving the design of an engine in such a way as to keep its overall dimensions to a minimum, even where required to drive several accessories, and thus simplify servicing both of the accessories and of the engine itself.

The stated object is achieved with an improvement as characterized in the appended claims, which consists substantially in coupling at least two accesory drive units in series, coaxially with one another, and preferably, in driving one of the two units from the engine through a train of gears. One of the advantages afforded by the improvement is that of secure operation, obtained by replacing a given number of belts with stronger and more durable components, for example gears, or the directly coupled shaft of another drive unit. Another advantage of the improvement is the ease with which access can be gained to the engine, obtained by adopting the arrangement of a train of gears and at least two coaxial drive units coupled by way of a simple flexible coupling. Moreover, the need to tension belts is dispensed with. A further advantage of the improvement is that it provides the facility of adding further drive units without reducing space around the engine.

The invention will now be described in detail, by way of example, with the aid of the accompanying sheet of drawings, in which:

fig 1 is the schematic side elevation of an engine incorporating the improvement disclosed;

fig 2 is the side elevation of a drive unit, seen partly in section, the shaft of which is coupled according to the improvement disclosed.

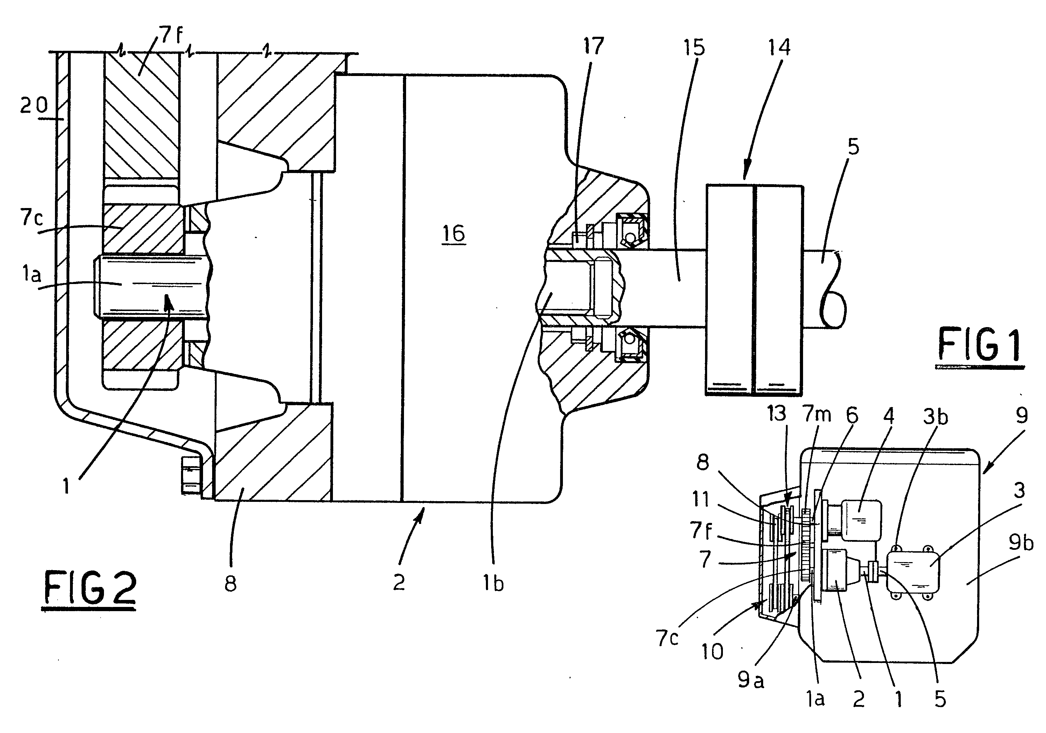

The schematic of fig 1 shows a diesel type engine, denoted 9 in its entirety, and more exactly, the part of the engine where a rotating shaft 9a, say, the crankshaft, emerges from the crankcase 9b. Conventionally, the shaft 9a transmits rotation through a train of gears to a number of drive units operating essential engine components such as the camshaft, the injection pump 4, brake servo vacuum pump and oil pump (not illustrated), and through a single or multiple pulley 10 and belt/s 11 to a corresponding number of drive units or auxiliaries such as the water pump and alternator, and pumps for power assisted steering and air conditioning systems. The various drive units are located at the sides of the engine 9, associating either directly or indirectly with the crankcase 9b.

According to the invention, at least one of the drive units, for example the p.a.s. pump 2, is embodied with a double extending shaft 1 one end 1a of which is connected to the shaft of the engine 9, and the other end 1b coupled to the shaft 5 of a further drive unit, for example the compressor 3 of the air conditioning system, which is mounted in series with the p.a.s. pump 2.

The two shafts 1 and 5 in question are coaxially disposed and connected, preferably, by a flexible coupling 14.

The drive units 2 and 3 thus coupled are coaxial, and disposed parallel to other units, for example the fuel injection pump 4 and the crankshaft 9a. The input end 1a of the p.a.s. pump shaft 1 is connected to the crankshaft 9a using a conventional type of transmission; in the example illustrated, rotation is transmitted through the shaft 6 of the injection pump 4, which is connected both to the camshaft and to the shaft 1 in question by way of a train of gears denoted 7.

It will be seen from fig 1 that the fuel injection pump 4 is secured to a projecting bracket 8 rigidly attached to the engine 9; this same bracket 8 also carries the p.a.s. pump 2, positioned parallel to the injection pump 4, whereas the air conditioning drive unit 3 is mounted direct to the crankcase 9b with bolts 3b.

The bracket might carry an idle gear 7f, forming part of a three-member train in which the driving member 7m is keyed to the shaft 6 of the injection pump 4 and the driven member 7c to the input end 1a of the p.a.s. pump shaft 1 (see also fig 2).

Fig 2 illustrates a possible embodiment of the p.a.s. pump 2, or other drive unit, that permits of transmitting rotation through two accessory drive units coupled in series according to the invention. The input end 1a of the double-extending shaft 1 carries the keyed driven gear 7c as aforementioned, whereas the remaining end 1b is externally splined, and slotted into the internally splined socket of a coaxial intermediate shaft 15 that passes through and projects from the pump cover 16. The socketed shaft 15 is embodied with a collar 17 serving to prevent axial movement in relation to the cover 16, and connected at its projecting end to the coaxial end of the shaft 5 of the second drive unit 3 by way of a flexible coupling 14. In the event of the vehicle being fitted with power assisted steering, though without air conditioning, then use could be made of a shorter, standard size shaft 15 that will not project from the pump cover 16.

In the event of the vehicle being assembled without the accessory drive units 2 and 3, it suffices simply to discard the idle gear 7f; the cover 20 by which the train of gears 7 is encased can be fitted just the same, and removed easily at a later stage should the need arise. Should it be decided, in fact, to fit p.a.s. and air conditioning with the vehicle already in use, the relative drive units 2 and 3 can be fitted without affecting the pulley 10 or belts 11. Similarly, in situations where a first drive unit 2 is already installed, the addition of a unit 3 for another accessory can be effected without any need for modifications that increase the transverse or longitudinal dimensions of the engine 9; all that is required is to mount the second drive unit 3 to the engine 9 and connect its shaft 5 to the intermediate shaft 15 by way of the flexible coupling 14.

The coaxial in-series coupling of the two pumps 2 and 3 thus described might also be adopted for other drive units (for example, at the remaining side of the crankcase), thereby reducing the overall dimensions of the engine 9 still further.

## Claims

1) An improvement in the dimensional design of motor vehicle engines, in particular, in the positioning of accessory drive units, characterized in that it consists in embodying at least a first drive unit (2) with a double-extending shaft (1), of which one end (1a) is connected to a rotating shaft of the engine (9), and the remaining end (1b) coupled to the shaft (5) of a further drive unit (3) installed in series with the first drive unit.

2) An improvement as in claim 1, wherein the shafts (1, 5) of the drive units (2, 3) coupled in series are disposed coaxially one with the other.

3) An improvement as in claim 2, wherein the shafts (1, 5) of the drive units (2, 3) coupled in series are connected one with the other by way of a flexible coupling (14).

4) An improvement as in claim 1, wherein the drive units coupled in series are positioned at one side of the crankcase of the engine (9), the unit (2) with the double-extending shaft (1) mounted to a bracket (8) rigidly attached to the crankcase, and the remaining drive unit (3) mounted direct to the crankcase.

5) An improvement as in claim 1, wherein the double-extending shaft (1) is connected to a rotating shaft of the engine (9), or to the shaft of a further drive unit mounted in a parallel position, by way of a train of gears (7).

FIG1

FIG2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 337 910 (WHITE & POPPE LTD) <br> * Page 2, lines 1-35; figure * <br> --- | 1-5 | B 60 K 25/02 <br> F 02 B 67/06 |
| X | US-A-1 422 995 (LINK) <br> * Page 2, line 27 - page 3, line 92; figures 1,3 * | 1,2,5 | |
| A | --- | 4 | |
| X | DE-A-3 331 807 (NIPPONDENSO CO., LTD) <br> * Page 5, paragraph 2 - page 6, paragraph 2; figure 1 * | 1,2 | |
| A | --- | 4 | |
| X | DE-B-1 183 740 (AUTO-UNION GmbH) <br> * Column 5, lines 10-37; figure 2 * | 1,2 | |
| A | ----- | 4 | |

TECHNICAL FIELDS
SEARCHED (Int. Cl.4)

B 60 K
F 02 B

The present search report has been drawn up for all claims

| Place of search | Date of completion of the search | Examiner |
|---|---|---|
| THE HAGUE | 26-06-1989 | FLODSTROEM J.B. |

EPO FORM 1503 03.82 (P0401)